# EUROPÄISCHE PATENTANMELDUNG

(11) **EP 2 821 211 A1**
(43) Veröffentlichungstag der Anmeldung: **07.01.2015**
(21) Anmeldenummer: 14175792.2
(22) Anmeldetag: 04.07.2014
(51) Int. Cl.: B29C 70/50, B29C 31/08, B29B 11/16, B29C 35/02, B29C 35/14

(54) **Faserhalbzeug-Fördervorrichtung**

(30) Priorität: 05.07.2013 DE 102013107106
(71) Anmelder: Deutsches Zentrum für Luft- und Raumfahrt e.V., 51147 Köln (DE)
(72) Erfinder: Zacharias, Fabian, 21684 Stade (DE); Grohmann, Yannis, 20249 Hamburg (DE)
(74) Vertreter: Aisch, Sebastian

(57) **Zusammenfassung**

Die Erfindung betrifft eine Faserhalbzeug-Fördervorrichtung (1) zum Fördern von Faserhalbzeugen (2), wobei mindestens eine Kontaktwalze (6a, 6b, 7a, 7b, 8a, 8b) vorgesehen ist, die eine Elektrode und/oder eine Gegenelektrode an ihrer Umfangsfläche aufweist, so dass eine elektrische Kontaktierung mit dem zu fördernden Faserhalbzeug erreicht wird, um einen Stromfluss in dem Faserhalbzeug zu bewirken, wenn das Faserhalbzeug in Förderrichtung gefördert wird.

## Beschreibung

Die Erfindung betrifft eine Faserhalbzeug-Fördervorrichtung zum Fördern von Faserhalbzeugen in eine Förderrichtung. Die Erfindung betrifft ebenso ein Verfahren hierzu.

Bauteile aus einem Faserverbundwerkstoff, so genannte Faserverbundbauteile, sind aus der Luft- und Raumfahrt heute nicht mehr wegzudenken. Aber auch im Automobilbereich findet die Verwendung derartiger Werkstoffe immer mehr Zuspruch. Insbesondere kritische Strukturelemente werden aufgrund der hohen gewichtsspezifischen Festigkeit und Steifigkeit bei minimalem Gewicht aus faserverstärkten Kunststoffen gefertigt. Durch die aus der Faserorientierung resultierenden anisotropen Eigenschaften der Faserverbundwerkstoffe können Bauteile exakter lokaler Belastungen angepasst werden und ermöglichen so eine optimale Materialausnutzung im Sinne des Leichtbaus.

Im Faserverbund-Fertigungsprozess kommen neben trockenen Faserhalbzeugen, wie beispielsweise Gelege oder Gewebe, auch so genannte Prepregs (mit einem Matrixmaterial vorimprägnierte Faserhalbzeuge) zum Einsatz. Durch die immer höheren Stückzahlen bei der Produktion von faserverstärkten Bauteilen, insbesondere in der Serienproduktion, bestehen große Bestrebungen, den Herstellungsprozess weitestgehend zu automatisieren, ohne dabei die Qualität des Herstellungsprozesses bzw. der herzustellenden Bauteile negativ zu beeinflussen.

Damit das herzustellende Bauteil die gewünschte Bauteilform erhält, können die Faserhalbzeuge durch Veränderung ihrer Geometrie in eine Form gebracht werden, die allein oder durch Zusammensetzen mehrerer geformter Faserhalbzeuge die gewünschte Bauteilform bildet. So ist beispielsweise aus der DE 10 2009 008 329 B4 eine Preform-Vorrichtung bekannt, mit der der Preform-Schritt halb- oder vollautomatisch durchgeführt werden kann. Hierzu wird ein flächiges Faserhalbzeug einer Schervorrichtung zugeführt, die eine konische Walze bzw. ein konisches Walzenpaar aufweist, so dass aufgrund der unterschiedlichen Umfangsgeschwindigkeiten eine Verscherung des Faserhalbzeuges bewirkt wird. Hierdurch lässt sich ein Fertigungsschritt qualitätssicher in die gewünschte Form bringen.

Bei größeren Bauteilen, wie beispielsweise Flügelschalen oder Rotorblättern von Windkraftanlagen, wird es meist notwendig, die als Meterware bereitgestellten Faserhalbzeuge bei einem mehrlagigen Aufbau aneinander anzuheften bzw. gegenseitig zu fixieren, um ein Verrutschen oder Verschieben der hochgenau abgelegten Faserhalbzeuge zu vermeiden. Diese Problematik wird dann noch verschärft, wenn die Faserhalbzeuge auf ein vertikal aufgestelltes Formwerkzeug abgelegt werden sollen.

Zur Fixierung trockener Faserhalbzeuge eignen sich beispielsweise Bindermaterialien, die bereits in den Faserhalbzeugen enthalten sind oder zusätzlich, beispielsweise während des Preformens, in den Faserformen eingebracht werden. Durch das Einbringen von Wärmeenergie in die trockenen Faserhalbzeuge können diese Bindermaterialien dann thermisch aktiviert werden, was ein Anheften der einzelnen Faserhalbzeuge bewirkt.

Hierneben besteht insbesondere bei bereits vorimprägnierten Faserhalbzeugen (Prepregs) oftmals die Notwendigkeit, die Faserhalbzeuge in einer bestimmten Form zu konsolidieren, um sie der weiteren Bearbeitung bzw. den weiteren Fertigungsschritten zuführen zu können. Hierbei wird Wärmeenergie in das Faserhalbzeug eingebracht, wodurch ein in dem Faserhalbzeug enthaltendes Material thermisch aktiviert wird und so dem Faserhalbzeug eine signifikante Erhöhung der Steifigkeit verleiht. Eine solche Konsolidierung kann beispielsweise durch Aktivierung eines thermisch aktivierbaren Bindermaterials erfolgen. Denkbar ist aber auch, dass das in dem Faserhalbzeug enthaltende Matrixmaterial durch den Wärmeenergieeintrag eine erste Vernetzungsreaktion durchführt, die dann zu der gewünschten Steifigkeit führt, ohne dass das Bauteil vollständig aushärtet.

Mit Hilfe der Konsolidierung lässt sich somit insbesondere bei Prepregs eine während des Preformens hergestellte Form des Faserhalbzeuges fixieren, so dass in den weiteren Fertigungsschritten nicht die Gefahr besteht, dass das vorgeformte Faserhalbzeug aus seiner Form fällt.

Aus der DE 103 53 070 A1 ist ein Verfahren und eine Vorrichtung zur Binderaktivierung von Faserhalbzeugen bekannt, bei dem in dem Formwerkzeug zwei Elektroden vorgesehen sind, die mit den insbesondere äußeren Randbereichen der Preform in Berührung stehen. Wird nun eine Spannung an die Elektroden angelegt, so erfolgt ein Stromfluss durch die Preform, was zu einer Erwärmung und somit zu einer Binderaktivierung führt. Nachteilig hierbei ist jedoch, dass die gesamte Preform erwärmt werden soll, was insbesondere bei einer Preform mit großem Lagenaufbau zu hohen Stromflüssen führt. Denn durch die Anordnung der Elektroden im Formwerkzeug erfolgt in der Regel der Stromfluss durch die unteren Faserhalbzeuglagen, so dass eine Binderaktivierung in höheren Faserhalbzeuglagen nur durch eine hohe Wärmeabstrahlung der unteren Lagen und somit durch einen hohen Stromfluss erreicht werden kann.

Aus der DE 10 2008 020 564 A1 ist eine Tapelegevorrichtung bekannt, bei der die Anpressrolle so ausgebildet ist, dass mit Hilfe von Infrarotstrahlung oder Induktion die abgelegten Fasertapes mit Wärmeenergie beaufschlagt werden können.

Im Hinblick auf die automatisierte Herstellung von Faserverbundbauteilen wird es notwendig, den Fertigungsprozess qualitätssicher zu gestalten. Es ist daher Aufgabe der vorliegenden Erfindung eine verbesserte Vorrichtung und ein verbessertes Verfahren anzugeben, mit dem während der Förderung bzw. des Transportes von Faserhalbzeugen, beispielsweise während des Preformens oder während der Konsolidierung, definiert Wärmeenergie in die zu fördernden Faserhalbzeuge eingebracht werden kann, so dass dieser Zwischenschritt im gesamten Fertigungsprozess mit wiederholbarer Qualität qualitätssicher reproduzierbar ist.

Die Aufgabe wird mit einer Faserhalbzeug-Fördervorrichtung gemäß Anspruch 1 sowie einem Verfahren zum Fördern von Faserhalbzeugen gemäß Anspruch 13 erfindungsgemäß gelöst.

Demnach wird erfindungsgemäß eine Faserhalbzeug-Fördervorrichtung zum Fördern von Faserhalbzeugen in eine Förderrichtung vorgeschlagen, die eine Materialbereitstellungseinrichtung aufweist, die zum Bereitstellen von zu fördernden Faserhalbzeugen eingerichtet ist. Die erfindungsgemäße Faserhalbzeug-Fördervorrichtung weist des Weiteren mindestens eine FaserhalbzeugKontaktwalze auf, welche mit einem Teil ihrer Umfangsfläche an einem zu fördernden Faserhalbzeug anliegt, wenn das Faserhalbzeug durch die Faserhalbzeug-Fördervorrichtung in Förderrichtung gefördert wird. Die FaserhalbzeugKontaktwalze(n) ist(sind) vorzugsweise drehbar gelagert.

Um nun thermische Wärmeenergie in das Faserhalbzeug einzubringen, weist die mindestens eine Faserhalbzeug-Kontaktwalze in ihrer Umfangsfläche mindestens eine mit einer elektrischen Energiequelle zum Anlegen einer elektrischen Spannung verbindbaren elektrischen Elektrode auf, die mit mindestens einer mit dem zu fördernden Faserhalbzeug ebenfalls elektrisch kontaktierten Gegenelektrode derart zusammenwirkt, das zwischen der Elektrode und der Gegenelektrode beim Anlegen einer elektrischen Spannung durch den entsprechend der Kontaktierung definierten Abschnitt des zu fördernden Faserhalbzeuges ein Stromfluss bewirkt wird, wenn das Faserhalbzeug in die Förderrichtung gefördert wird.

Durch den definierten Stromfluss zwischen der Elektrode und der Gegenelektrode in dem zu fördernden Faserhalbzeug wird aufgrund des elektrischen Widerstandes der elektrisch leitfähigen Faserhalbzeuge, wie beispielsweise Kohlenstofffaserverstärkte Faserhalbzeuge, thermische Verlustleistung in dem zu fördernden Faserhalbzeug erzeugt, so dass das Faserhalbzeug in dem durch die Elektrode und Gegenelektrode definierten Abschnitt erwärmt wird. Der Stromfluss kann je nach Anordnung der Elektrode und Gegenelektrode in Faserrichtung oder quer zur Faserrichtung bewirkt werden.

In einer ersten Ausführungsform ist die Gegenelektrode nicht Bestandteil der Faserhalbzeug-Fördervorrichtung. In weiteren vorteilhaften Ausführungsformen kann die Faserhalbzeug-Fördervorrichtung darüber hinaus auch die Gegenelektrode aufweisen.

Unter dem Begriff "Fördern" im Sinne der erfindungsgemäßen FaserhalbzeugFördervorrichtung wird im Wesentlichen das Transportieren von Faserhalbzeugen, insbesondere flächiger Faserhalbzeuge, in eine Förderrichtung innerhalb eines Zeitraumes verstanden. Durch das Fördern der Faserhalbzeuge kann beispielsweise ein Preforming an den zu fördernden Faserhalbzeugen, beispielsweise mittels einer konischen Walze, durchgeführt werden. Denkbar ist auch, dass während des Förderns der Faserhalbzeuge ein Laminataufbau aus mehreren Faserhalbzeugen erzeugt wird, durch den dann ein entsprechender Stromfluss mittels der Faserhalbzeug-Kontaktwalze bewirkt wird.

Unter dem Begriff "Fördern" wird insbesondere auch eine intermettierende Förderung verstanden, bei der die Bewegung des Faserhalbzeuges wärhend der Förderung nicht zwingend konstant sein muss und ggf. sogar für eine gewisse Zeit gestoppt werden kann. So ist es bspw. denkbar, dass die Bewegung gestoppt, der Stromfluss erzeugt und dann die Bewegung des Faserhalbzeuges fortgesetzt wird.

Unter einer Walze im Sinne der vorliegenden Erfindung wird ein drehbar gelagerter Körper verstanden, der einen kreisförmigen Querschnitt aufweist. Dies kann beispielsweise ein zylinderförmiger oder kegelförmiger Körper sein. Unter einer Kontaktwalze im Sinne der vorliegenden Erfindung wird darüber hinaus auch ein profilierter Körper verstanden, dessen Umfangsfläche ein Profil zur Umformung des zu fördernden Faserhalbzeuges aufweist.

Die Erfinder haben hierbei erkannt, dass mit Hilfe der erfindungsgemäßen Faserhalbzeug-Fördervorrichtung auch während des Förderns von Faserhalbzeugen, beispielsweise zum Preforming oder zur Herstellung von Faserhalbzeuglaminaten mit Hilfe von Elektrode und Gegenelektrode ein Stromfluss in den oder dem Faserhalbzeug(en) bewirkt werden kann, so dass hierdurch Wärmeenergie in das Faserhalbzeug eingebracht werden kann. Hierdurch lässt sich beispielsweise während eines Preformschrittes Wärmeenergie zur Konsolidierung der Preform einbringen. Denkbar ist auch, dass beispielsweise beim Aufbau eines Faserhalbzeuglaminates Wärmeenergie eingebracht wird, um die mehreren Schichten Faserhalbzeug gegeneinander zu fixieren.

Dies hat den Vorteil, dass ein genau definierter Wärmeeintrag in das oder die Faserhalbzeug(e) eingebracht werden kann, was zu einem qualitätssicheren Prozess führt. Darüber hinaus wird der Wärmeeintrag während des Förderns der Faserhalbzeuge bewirkt, was die Prozesszeiten des gesamten Fertigungsprozesses verkürzt. Schließlich ist ein Vorteil darin zu sehen, dass der Wärmeeintrag dann bewirkt wird, wenn er innerhalb der Prozesskette notwendig ist, beispielsweise beim Preformen zur Konsolidierung oder beim Laminataufbau zur Fixierung.

In einer vorteilhaften Ausführungsform weist die FaserhalbzeugFördervorrichtung zumindest eine weitere Faserhalbzeug-Kontaktwalze auf, in dessen Umfangsfläche die mindestens eine elektrische Gegenelektrode, die ebenfalls mit der elektrischen Energiequelle verbindbar ist, vorgesehen ist. so können die Kontaktwalze mit der Elektrode und die Kontaktwalze mit der Gegenelektrode in Förderrichtung beabstandet angeordnet sein, so dass bei Kontaktierung auf ein und derselben Faserhalbzeugseite ein Stromfluss in Faserrichtung bewirkt wird. Denkbar ist auch, dass die Kontaktwalze mit der Elektrode auf einer ersten Seite das Faserhalbzeug kontaktiert und die Kontaktwalze mit der Gegenelektrode ein zu förderndes Faserhalbzeug auf einer der ersten Seite gegenüberliegenden zweiten Seite kontaktiert, so dass ein Stromfluss auch quer zum Faserverlauf durch das oder die Faserhalbzeug(e) bewirkt werden kann.

In einer vorteilhaften Ausführungsform ist ein Kontaktwalzenpaar vorgesehen, das eine erste Kontaktwalze und eine zweite Kontaktwalze aufweist. Die erste Kontaktwalze kontaktiert dabei ein zu förderndes Faserhalbzeug auf einer ersten Seite, während das zweite Kontaktwalzenpaar ein zu förderndes Faserhalbzeug an einer der ersten Seite gegenüberliegenden zweiten Seite kontaktiert, so dass das zu fördernde Halbzeug zwischen den beiden Kontaktwalzen hindurchgeführt wird.

So ist es beispielsweise denkbar, dass an der ersten Kontaktwalze des Kontaktwalzenpaares die Elektrode und an der zweiten Kontaktwalze die Gegenelektrode angeordnet wird, wodurch ein Stromfluss zwischen Elektrode und Gegenelektrode durch beide Kontaktwalzen hindurchgeführte Faserhalbzeug bewirkt wird. Denkbar ist aber auch, dass sowohl die erste als auch die zweite Kontaktwalze die Elektrode oder die Gegenelektrode aufweisen, so dass das Kontaktwalzenpaar in seiner gesamten Einheit entweder die Elektrode oder die Gegenelektrode bildet. Hierbei lässt sich beispielsweise mittels eines zweiten Kontaktwalzenpaares das entsprechende Gegenstück (Gegenelektrode/ Elektrode) realisieren.

In einer weiteren vorteilhaften Ausführungsform ist es beispielsweise denkbar, dass eine Vielzahl von Kontaktwalzen vorgesehen sind, die in ihrer Umfangsfläche jeweils mindestens eine Elektrode aufweisen. Hierdurch wird es möglich, insbesondere bei größeren Faserhalbzeugen, eine hinreichende Abdeckung der Faserhalbzeugfläche mit kontaktierten Elektroden zu gewährleisten.

Selbstverständlich kann das Ausführungsbeispiel alternativ oder im Zusammenhang mit den vorstehenden Ausführungsbeispielen gesehen werden, so dass beispielsweise eine Mehrzahl von Kontaktwalzenpaaren denkbar sind, die jeweils zwei Kontaktwalzen aufweisen, die jeweils mindestens eine Elektrode aufweisen.

In einer weiteren vorteilhaften Ausführungsform ist es denkbar, dass eine Mehrzahl von Kontaktwalzen vorgesehen ist, wobei eine erste Anzahl von Kontaktwalzen die Elektroden und eine andere Anzahl von Kontaktwalzen die Gegenelektroden aufweisen. Durch die entsprechende Anordnung der Kontaktwalzen mit der jeweiligen Elektrodenart lässt sich somit gezielt ein Stromfluss in dem Faserhalbzeug bewirken.

Auch dieses Ausführungsbeispiel ist alternativ oder zusätzlich zu den vorherstehenden Ausführungsbeispielen zu sehen, so dass beispielsweise eine Mehrzahl von Walzenpaaren vorgesehen sein können, bei dem die eine Walze die Elektrode oder die andere Walze die Gegenelektrode aufweist. Denkbar ist aber auch, dass eine Mehrzahl von Walzenpaaren vorgesehen sind, wobei eine erste Anzahl von Walzenpaaren ausschließlich die Elektroden und eine andere Anzahl von Walzenpaaren ausschließlich die Gegenelektroden aufweisen, so dass hierdurch ein Stromfluss zwischen den Walzenpaaren mit Elektrode und den Walzenpaaren mit Gegenelektroden in dem Faserhalbzeug in Faserrichtung bewirkt wird.

In einer weiteren alternativen oder zusätzlichen Ausführungsform wird vorgeschlagen, dass an einer Faserhalbzeug-Kontaktwalze eine Mehrzahl von elektrischen Elektroden und/oder Gegenelektroden vorgesehen sind, die gegeneinander isoliert sind. So ist es beispielsweise denkbar, dass an einer Kontaktwalze mehrere gegeneinander isolierte Elektroden oder Gegenelektroden vorgesehen sind, so dass es lediglich einer Walze bedarf, um eine größere Fläche von Faserhalbzeugen abzudecken. Denkbar ist allerdings auch, dass eine Kontaktwalze vorgesehen ist, die genau eine Elektrode und genau eine Gegenelektrode hat, die gegeneinander isoliert in der Umfangsfläche vorgesehen sind, so dass zwischen der Elektrode und der Gegenelektrode der Kontaktwalze in dem Faserhalbzeug ein Stromfluss bewirkt wird. Der Stromfluss wird dabei quer zur Förderrichtung des zu fördernden Faserhalbzeuges bewirkt. Der Stromfluss wird somit parallel zur Achse der Kontaktwalze in dem Faserhalbzeug bewirkt. So kann die Walze beispielsweise ein elektrisch leitfähiges Material aufweisen, wobei durch ein aufgebrachtes isolierendes Material die Mehrzahl von Elektroden und/oder Gegenelektroden gebildet werden.

Hierbei ist es ganz besonders vorteilhaft, wenn die Elektrode und die Gegenelektrode an jeweils einem Ende der Kontaktwalze angeordnet ist, so dass sich ein entsprechend größerer definierter Abschnitt, in dem der Stromfluss bewirkt wird, definieren lässt.

In einer weiteren alternativen oder zusätzlichen Ausführungsform ist mindestens eine Kontaktwalze so vorgesehen, dass die mindestens eine in der Umfangsfläche vorgesehene Elektrode und/oder Gegenelektrode gegenüber der Faserhalbzeug-Kontaktwalze radial abstehend ausgebildet sind. Hierdurch lässt sich in Art einer Pickel- oder Buckelwalze eine reliefartige Umfangsfläche erzeugen, so dass der Übergangswiderstand im Bereich der abstehenden Elektroden und/oder Gegenelektroden durch die Kompaktierung der Fasern in diesen Bereichen reduziert wird, was zu einer verbesserten Steuerung des Stromflusses innerhalb des Faserhalbzeuges führt. Diese Art der Anordnung der Elektroden und/oder Gegenelektroden in der Umfangsfläche eignet sich dabei besonders gut zum Anheften mehrerer Faserhalbzeuglagen, da hierdurch nur punktuell ein Stromfluss bewirkt wird, insbesondere dann, wenn die Gegenelektrode auf der gegenüberliegenden Seite der kontaktierten Seite des Faserhalbzeuges anliegt.

Darüber hinaus ist es vorteilhaft und zweckmäßig, wenn eine oder mehrere der Kontaktwalzen so ausgebildet sind, dass sie zum Erzeugen einer Anpresskraft in Richtung der zu fördernden Faserhalbzeuge ausgebildet sind, um die Fasern im Bereich der Kontaktierung zu kompaktieren. Durch die Kompaktierung der Fasern im Bereich der Kontaktierung der Walze mit dem Faserhalbzeug wird der Übergangswiderstand reduziert, was einen definierten Stromfluss in diesem Bereich begünstigt.

Schließlich kann die Faserhalbzeug-Fördervorrichtung so ausgebildet sein, dass eine oder mehrere der Kontaktwalzen mit einem Förderantrieb verbunden sind, um die Faserhalbzeug in die entsprechende Förderrichtung zu fördern.

In einer weiteren vorteilhaften Ausführungsform ist eine Leistungsregeleinheit vorgesehen, die zum Regeln der elektrischen Leistung des in dem Faserhalbzeug bewirkten Stromflusses in Abhängigkeit von einer Fördergeschwindigkeit eingerichtet ist. Eine derartige Leistungsregeleinheit kann beispielsweise in der elektrischen Energiequelle vorgesehen sein. So kann beispielsweise die elektrische Leistung bei geringeren Fördergeschwindigkeiten niedriger sein und mit zunehmender Fördergeschwindigkeit erhöht werden. Dadurch wird der Vorteil erreicht, dass beim Anfahren der Fördervorrichtung zu Beginn des Vorschubs kein zu hoher Energieeintrag in die zu fördernden Faserhalbzeug bewirkt wird, was zu Beschädigungen der Faserhalbzeuge führen kann. Vielmehr wird die elektrische Leistung so geregelt, dass sie sich der Fördergeschwindigkeit der Fördervorrichtung anpasst.

In einer weiteren vorteilhaften Ausführungsform weist die Fördervorrichtung eine Mehrzahl von elektrischen Elektroden und/oder Gegenelektroden an einer oder mehreren Kontaktwalzen auf, wobei eine Elektrodensteuereinheit vorgesehen ist, die eingerichtet ist, nacheinander jeweils an mindestens einer der Elektroden (vorzugsweise an nur einer Elektrode zur gleichen Zeit) eine elektrische Spannung anzulegen und die übrigen Elektroden und/oder Gegenelektroden derart zu schalten, dass ein Stromfluss zwischen der jeweiligen Elektrode und/oder einer vorgegebenen Gegenelektrode bewirkt wird. So wird nacheinander an jeder Elektrode eine Spannung angelegt, um einen Stromfluss zu bewirken, wobei die entsprechenden übrigen Elektroden und Gegenelektroden so geschaltet werden, dass ein Stromfluss genau zwischen der Elektrode, an der die Spannung angelegt wurde, und einer definierten Gegenelektrode bewirkt wird. Hierdurch wird der Vorteil erreicht, dass insbesondere bei großflächigen Faserhalbzeugen eine ausreichende und großflächige Temperierung erreicht werden kann. Die Elektroden werden dabei sequentiell nacheinander geschaltet.

Darüber hinaus ist es zweckmäßig, wenn die elektrische Energiequelle zum Anlegen der Spannung an die Elektroden und/oder Gegenelektroden mit einer Steuereinrichtung verbunden ist, so dass das Anlegen der Spannung an die Elektroden und/oder Gegenelektroden entsprechend gesteuert werden kann. So ist es beispielsweise denkbar, dass die Steuereinrichtung so eingerichtet ist, dass die elektrische Energiequelle so angesteuert werden kann, dass die Spannung separat an jede Elektrode und/oder Gegenelektrode entsprechend individuell definiert angelegt werden kann. Hierdurch lassen sich Steuerungsmuster definieren, die je nach Anordnung der Elektroden und/oder Gegenelektroden zu verschiedenen Stromflüssen innerhalb der Faserhalbzeuge führen. Die Erfindung wird anhand der beigefügten Zeichnungen beispielhaft näher erläutert. Es zeigen:
- Figur 1a bis 1c: - schematische Darstellung einer Preformeinrichtung;
- Figur 2a, 2b: - schematische Darstellung einer ersten Variante;
- Figur 3a, 3b: - schematische Darstellung einer zweiten Variante;
- Figur 4a, 4b: - schematische Darstellung einer dritten Variante;
- Figur 5a, 5b: - schematische Darstellung einer vierten Variante;
- Figur 6: - schematische Darstellung einer fünften Variante.

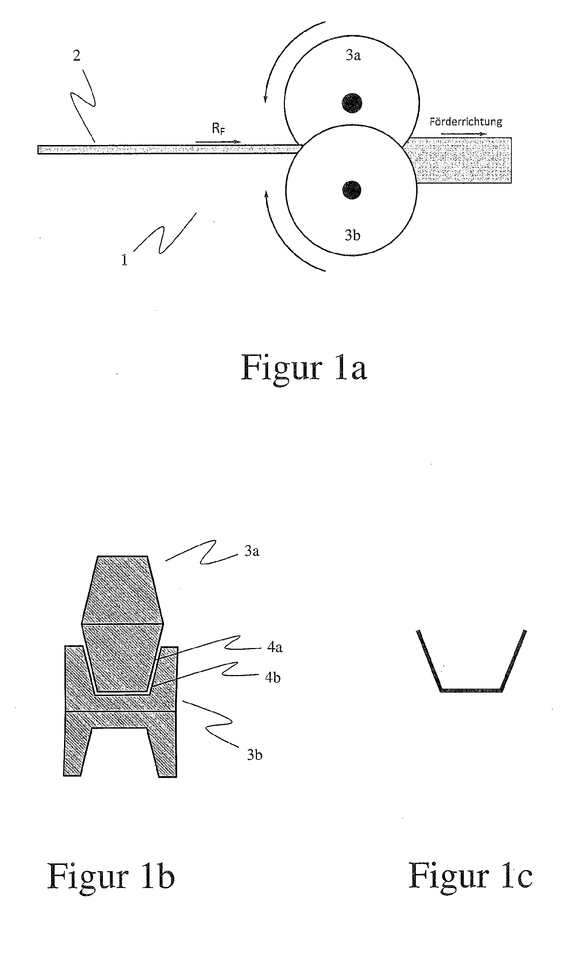

Figuren 1a bis 1c zeigen aus verschiedenen Perspektiven schematisch eine Preformeinrichtung zum Umformen von Faserhalbzeugen 2. Die Preformeinrichtung ist dabei im weitesten Sinne eine Fördereinrichtung 1, mit der das Faserhalbzeug 2 in Förderrichtung R_{F} bewegt wird. Mittels zweier Umformwalzen 3a und 3b, die als Paar ausgebildet sind und eine entsprechende Profilierung zum Umformen der Faserhalbzeuge 2 aufweisen, wird das Faserhalbzeug 2 in die gewünschte Form gebracht, so wie es in Figur 1c in der Schnittansicht dargestellt ist. Mit Hilfe einer solchen Preformeinrichtung 1 lässt sich somit aus einem flächigen Faserhalbzeug 2 ein U-Profil erzeugen.

In Figur 1b ist eine axiale Schnittansicht der Umformwalzen 3a und 3b gezeigt. Die Umformwalze 3b zeigt dabei eine U-profilierte Umfangsfläche 4b auf, die mit der Umfangsfläche 4a der Umformwalze 3a entsprechend so korrespondiert, dass ein flächiges Faserhalbzeug in die gewünschte U-Profilform gebracht werden kann.

Wie weiter unten im Detail noch ausgeführt wird, ist erfindungsgemäß an einem oder beiden Umformwalzen 3a und 3b eine Elektrode und/oder Gegenelektrode vorgesehen, die in der Umfangsfläche 4a, 4b der Umformwalzen 3a, 3b angeordnet sind, so dass die Elektrode und/oder Gegenelektrode mit dem Faserhalbzeug während des Umformvorgangs kontaktiert wird. Hierdurch kann ein Stromfluss in dem Faserhalbzeug 2 während des Umformvorgangs bewirkt werden, so dass aufgrund des elektrischen Widerstandes des Faserhalbzeuges 2 Wärmeenergie in das Faserhalbzeug 2 eingebracht werden kann.

Durch den Wärmeeintrag in das Faserhalbzeug kann dieses beispielsweise in seiner Form konsolidiert werden, beispielsweise durch thermische Aktivierung eines Bindermaterials, so dass die gewünschte Halbzeugform so wie sie in Figur 1 c dargestellt ist, fixiert wird und auch nach dem Preformvorgang dauerhaft vorliegt, ohne dass das Faserhalbzeug aus der Form fällt.

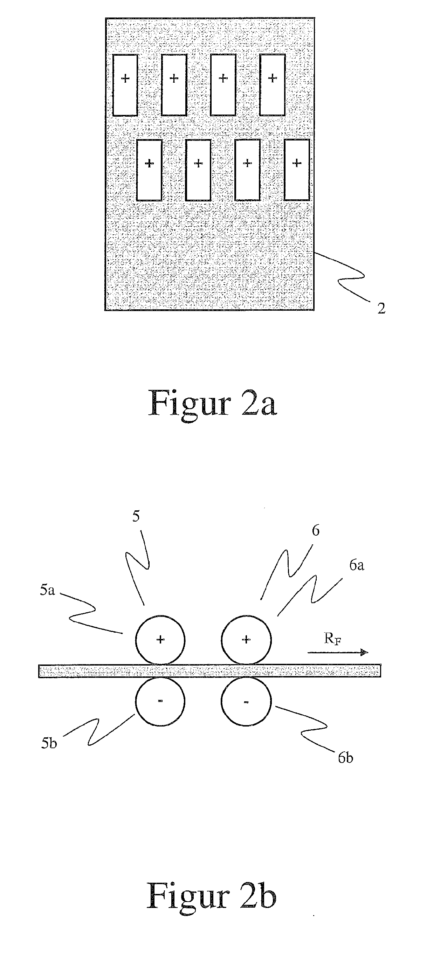

Figur 2a, 2b zeigt schematisch eine Darstellung einer ersten Variante der Anordnung der Elektroden und Gegenelektroden. Aus Übersichtlichkeitsgründen wurde die elektrische Energiequelle nicht dargestellt. Figur 2a zeigt dabei eine Draufsicht auf das zu fördernde Faserhalbzeug 2 mit seinen Kontaktwalzen 3a, 3b, während Figur 2b eine Seitenansicht zeigt.

Im Ausführungsbeispiel der Figur 2a, 2b sind mindestens zwei Walzenpaare 5 und 6 vorgesehen, die jeweils zwei Kontaktwalzen 5a, 5b und 6a, 6b aufweisen. Die oberen Kontaktwalzen 5a und 6a der Walzenpaare 5, 6 weisen dabei an ihrer Umfangsfläche die Elektrode auf, während die unteren Kontaktwalzen 5b, 6b die jeweilige Gegenelektrode an ihrer Umfangsfläche tragen.

Zumindest jeweils eine Kontaktwalze der beiden Walzenpaare 5, 6 ist dabei so ausgebildet, dass es eine Kraft in Richtung des Faserhalbzeuges 2 aufbringt, so dass das Faserhalbzeug, das zwischen den jeweiligen Kontaktwalzen 5a, 5b und 6a, 6b der beiden Walzenpaare 5, 6 hindurchgeführt wird, im Kontaktbereich kompaktiert wird, so dass hier die Fasern eine entsprechende Kompaktierung erfahren. Hierdurch wird der Übergangswiderstand verringert, so dass zwischen der Elektrode und der Gegenelektrode des jeweiligen Walzenpaares 5, 6 ein Stromfluss in dem Faserhalbzeug bewirkt wird. Im Ausführungsbeispiel der Figur 2a, 2b ist der Stromfluss dabei senkrecht zur Faserebene.

Des Weiteren ist im Ausführungsbeispiel der Figur 2a, 2b gezeigt, dass eine Mehrzahl derartiger Walzen bzw. Walzenpaare separat vorgesehen sind, wodurch das Faserhalbzeug 2 großflächig temperiert werden kann. Denkbar ist allerdings auch, dass die Elektroden und/oder Gegenelektroden mehrfach auf ein und derselben Walze vorgesehen sind, wobei die Elektroden und/oder die Gegenelektroden dann gegeneinander isolierend angeordnet sind. Hierdurch lässt sich die Anlagenkomplexität verringern.

Des Weiteren ist im Ausführungsbeispiel der Figur 2a, 2b angedeutet, dass das Walzenpaar 6 mit einem entsprechenden Förderantrieb verbunden ist, so dass die Walzen 6a, 6b des Walzenpaares 6 zur Förderung des Faserhalbzeuge 2 in Förderrichtung ausgebildet sind.

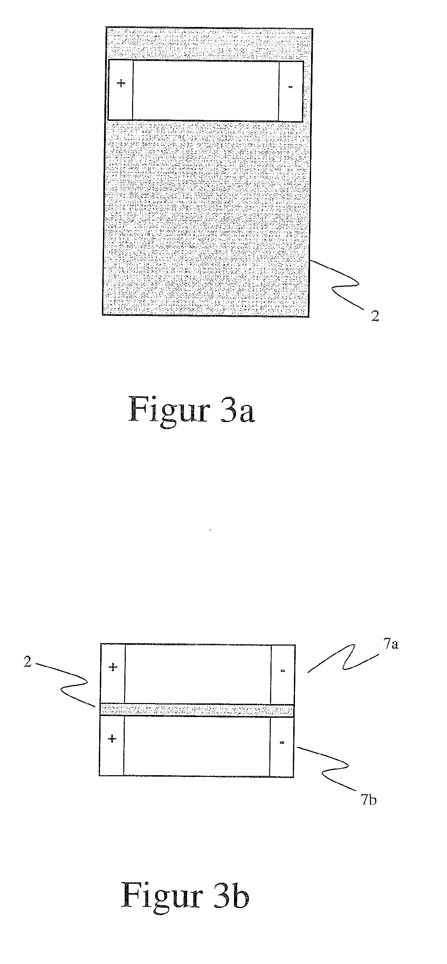

Figur 3a, 3b zeigt schematisch eine zweite Variante der vorliegenden Erfindung. Dabei ist ein Walzenpaar vorgesehen, das eine erste Kontaktwalze 7a und eine zweite Kontaktwalze 7b aufweist, zwischen denen dann das Faserhalbzeug 2 hindurchgeführt wird. Sowohl die Elektrode als auch die Gegenelektrode ist dabei jeweils auf einer Kontaktwalze 7a, 7b beabstandet angeordnet, wodurch ein Stromfluss quer zur Förderrichtung in dem Faserhalbzeug bewirkt wird. Die Elektrode und Gegenelektrode ist dabei auf der jeweiligen Walze 7a, 7b isolierend vorgesehen.

Dabei ist es selbstverständlich denkbar, dass nicht nur eine Elektrode und Gegenelektrode vorgesehen sind, sondern mehrere Elektroden und Gegenelektroden, die beispielsweise entlang der Walze jeweils abwechselnd angeordnet sind.

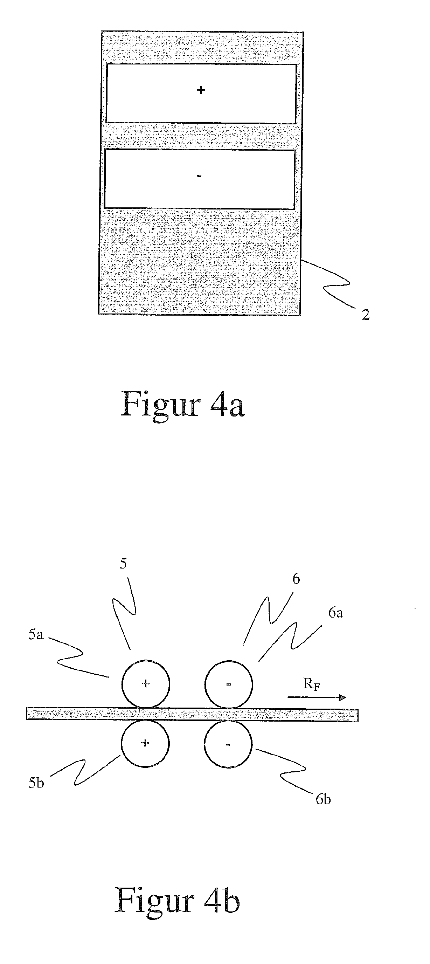

In Figur 4a, 4b ist des Weiteren eine schematische Darstellung einer dritten Variante gezeigt, bei der ein Walzenpaar 6 und 7 vorgesehen ist, das jeweils zwei Kontaktwalzen 6a, 6b und 7a, 7b aufweist. Die Kontaktwalzen 6a, 6b des Walzenpaares 6 weisen dabei lediglich die Elektrode auf, während die Kontaktwalzen 7a, 7b des Walzenpaares 7 die Gegenelektrode aufweist. Walzenpaar 6 und 7 sind dabei beabstandet voneinander angeordnet, beispielsweise in Förderrichtung beabstandet, so dass ein Stromfluss in dem Faserhalbzeug zwischen Walzenpaar 6 und 7 bewirkt wird.

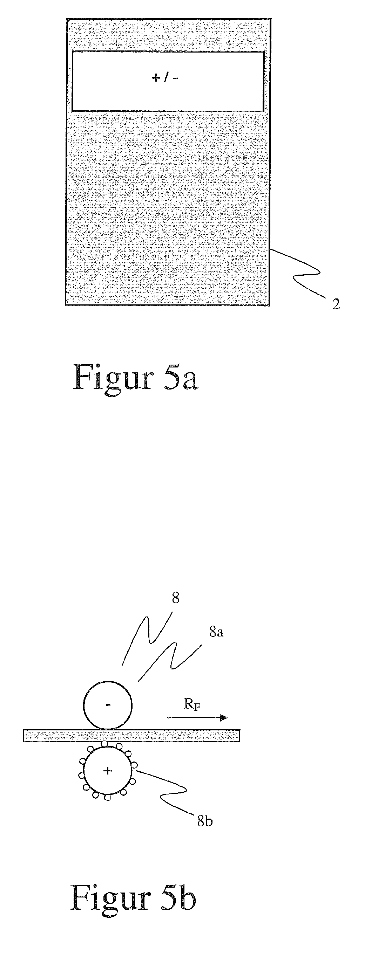

Figur 5a, 5b zeigt schematisch eine vierte Variante der vorliegenden Erfindung, bei der ein Walzenpaar 8 vorgesehen ist, das aus zwei Kontaktwalzen 8a und 8b besteht. Zumindest eine der Kontaktwalzen, hier im Ausführungsbeispiel die Kontaktwalze 8b ist dabei so ausgebildet, dass die Elektroden und/oder Gegenelektroden gegenüber der Walze radial abstehend ausgebildet sind, so dass sich eine Art Buckel- oder Pickelwalze ergibt. Die einzelnen Buckel oder Pickel, d.h. die radial abstehenden Elektroden und/oder Gegenelektroden, sind dabei über die Umfangsfläche so verteilt, dass sich eine reliefartige Umfangsfläche der Kontaktwalze 8b ergibt. Im Bereich der Pickel bzw. Buckel der Walze konzentriert sich dabei die Anpresskraft auf eine kleine Fläche, so dass in diesem Bereich eine hohe Kompaktierung der Fasern erreicht wird, wodurch der Übergangswiderstand in diesem Bereich verringert wird, was zu einem definierten Stromfluss durch insbesondere mehrere Faserlagen führt.

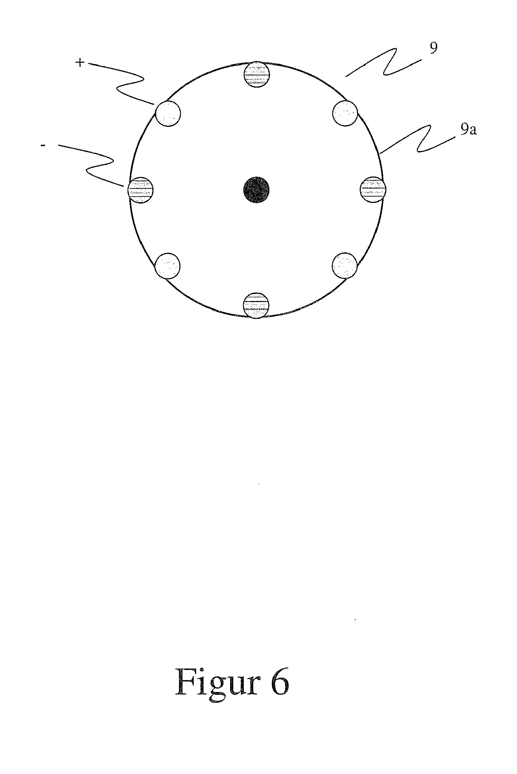

Figur 6 zeigt schließlich eine fünfte Variante, bei der eine Kontaktwalze 9 dargestellt ist, an deren Umfangsfläche 9a die Elektroden und Gegenelektroden über den Umfang der Umfangsfläche 9a verteilt sind, so wie dies in der Querschnittdarstellung der Figur 6 schematisch angedeutet ist. Hierbei sind die Elektrode und die Gegenelektrode auf einer Walze 9 so angeordnet, dass sie jeweils auf der Walze radial beabstandet angeordnet sind, im Gegensatz zu der zweiten Variante der Figuren 3a, 3b, wo die Gegenelektrode und Elektrode axial beabstandet angeordnet sind.

### Bezugszeichenliste

- 1: Faserhalbzeug-Fördervorrichtung
- 2: Faserhalbzeug
- 3a, 3b: profilierte Kontaktwalze
- 4a, 4b: Umfangsfläche der jeweiligen Kontaktwalze 3a, 3b
- R_{F}: Förderrichtung
- 5, 6: Walzenpaar
- 5a, 5b: Kontaktwalzen des Walzenpaares 5
- 6a, 6b: Kontaktwalzen des Walzenpaares 6
- 7: Walzenpaar
- 7a, 7b: Kontaktwalzen des Walzenpaares 7
- 8: Walzenpaar
- 8a, 8b: Kontaktwalzen des Walzenpaares 8
- 9: Kontaktwalze
- 9a: Umfangsfläche der Kontaktwalze 9
- +: Elektrode
- -: Gegenelektrode

## Patentansprüche

1. Faserhalbzeug-Fördervorrichtung (1) zum Fördern von Faserhalbzeugen (2) in eine Förderrichtung (R_{F}) mit einer Materialbereitstellungseinrichtung zum Bereitstellen von zu fördernden Faserhalbzeugen und mit mindestens einer Faserhalbzeug-Kontaktwalze, welche mit einem Teil ihrer Umfangsfläche an einem zu fördernden Faserhalbzeug anliegt, **dadurch gekennzeichnet, dass** in der Umfangsfläche der FaserhalbzeugKontaktwalze (6a, 6b, 7a, 7b, 8a, 8b) mindestens eine mit einer elektrischen Energiequelle zum Anlegen einer elektrischen Spannung verbindbaren elektrischen Elektrode vorgesehen ist, die mit mindestens einer mit dem zu fördernden Faserhalbzeug (2) ebenfalls elektrisch kontaktierten Gegenelektrode derart zusammenwirkt, dass in einem durch die Kontaktierung der mindestens einen Elektrode und der mindestens einen Gegenelektrode definierten Abschnitt des zu fördernden Faserhalbzeuges ein Stromfluss bewirkt wird.

2. Faserhalbzeug-Fördervorrichtung nach Anspruch 1, **dadurch gekennzeichnet, dass** die Faserhalbzeug-Fördervorrichtung zumindest eine weitere Faserhalbzeug-Kontaktwalze hat, in dessen Umfangsfläche die mindestens eine elektrische Gegenelektrode vorgesehen ist.

3. Faserhalbzeug-Fördervorrichtung nach Anspruch 1 oder 2, **dadurch gekennzeichnet, dass** die Faserhalbzeug-Fördervorrichtung wenigstens ein Faserhalbzeug-Kontaktwalzenpaar mit einer ersten FaserhalbzeugKontaktwalze, welche an einer ersten Seite eines zu fördernden Faserhalbzeuges mit einem Teil ihrer Umfangsfläche anliegt, und mit einer zweiten Faserhalbzeug-Kontaktwalze, welche an einer der ersten Seite gegenüberliegenden zweiten Seite eines zu fördernden Faserhalbzeug mit einem Teil ihrer Umfangsfläche anliegt, so dass das zu fördernde Faserhalbzeug zwischen der ersten Faserhalbzeug-Kontaktwalze und der zweiten Faserhalbzeug-Kontaktwalze hindurch geführt wird.

4. Faserhalbzeug-Fördervorrichtung nach einem der vorhergehenden Ansprüche, **dadurch gekennzeichnet, dass** eine Mehrzahl von Faserhalbzeug-Kontaktwalzen vorgesehen sind, die beabstandet von einander angeordnet sind.

5. Faserhalbzeug-Fördervorrichtung nach einem der vorhergehenden Ansprüche, **dadurch gekennzeichnet, dass** eine Mehrzahl von Faserhalbzeug-Kontaktwalzen vorgesehen sind, wobei jede FaserhalbzeugKontaktwalze mindestens eine elektrische Elektrode hat, die mit einer entsprechenden Gegenelektrode zum Bewirken des Stromflusses zusammenwirkt.

6. Faserhalbzeug-Fördervorrichtung nach einem der vorhergehenden Ansprüche, **dadurch gekennzeichnet, dass** eine Mehrzahl von Faserhalbzeug-Kontaktwalzen vorgesehen sind, wobei eine erste Anzahl von Faserhalbzeug-Kontaktwalzen jeweils mindestens eine elektrische Elektrode und eine zweite Anzahl von Faserhalbzeug-Kontaktwalzen jeweils mindestens eine elektrische Gegenelektrode haben.

7. Faserhalbzeug-Fördervorrichtung nach einem der vorhergehenden Ansprüche, **dadurch gekennzeichnet, dass** an mindestens einer Faserhalbzeug-Kontaktwalze eine Mehrzahl von elektrischen Elektroden und/oder Gegenelektroden vorgesehen sind, die gegeneinander isoliert sind.

8. Faserhalbzeug-Fördervorrichtung nach einem der vorhergehenden Ansprüche, **dadurch gekennzeichnet, dass** die mindestens eine in der Umfangsfläche vorgesehene Elektrode und/oder Gegenelektrode gegenüber der Faserhalbzeug-Kontaktwalze radial abstehend ausgebildet sind.

9. Faserhalbzeug-Fördervorrichtung nach einem der vorhergehenden Ansprüche, **dadurch gekennzeichnet, dass** mindestens eine der Faserhalbzeug-Kontaktwalzen zum Aufbringen einer Kraft in Richtung des zu fördernden Faserhalbzeuges zur Kompaktierung der Fasern des Faserhalbzeuges ausgebildet ist.

10. Faserhalbzeug-Fördervorrichtung nach einem der vorhergehenden Ansprüche, **dadurch gekennzeichnet, dass** mindestens eine der Faserhalbzeug-Kontaktwalzen einen Antrieb zum Fördern der zu fördernden Faserhalbzeuge aufweist.

11. Faserhalbzeug-Fördervorrichtung nach einem der vorhergehenden Ansprüche, **dadurch gekennzeichnet, dass** eine Leistungsregeleinheit vorgesehen ist, die zum Regeln der elektrischen Leistung des in dem Faserhalbzeug bewirkten Stromflusses in Abhängigkeit von einer Fördergeschwindigkeit eingerichtet ist.

12. Faserhalbzeug-Fördervorrichtung nach einem der vorhergehenden Ansprüche, **dadurch gekennzeichnet, dass** die FaserhalbzeugFördervorrichtung eine Mehrzahl von elektrischen Elektroden und/oder Gegenelektroden an einer oder mehreren Kontaktwalzen hat, wobei eine Elektrodensteuereinheit vorgesehen ist, die eingerichtet ist, nacheinander jeweils an mindestens einer der Elektroden (6) eine elektrische Spannung anzulegen und die übrigen Elektroden und/oder Gegenelektroden derart zu schalten, dass ein Stromfluss zwischen der jeweiligen Elektrode und einer vorgegebenen Gegenelektrode bewirkt wird.

13. Verfahren zum Fördern von Faserhalbzeugen in eine Förderrichtung, mit
a) Bereitstellen einer Faserhalbzeug-Fördervorrichtung, die eine Materialbereitstellungseinrichtung zum Bereitstellen von zu fördernden Faserhalbzeugen und mindestens eine Faserhalbzeug-Kontaktwalze hat, welche mit einem Teil ihrer Umfangsfläche an einem zu fördernden Faserhalbzeug anliegt, wobei in der Umfangsfläche der Faserhalbzeug-Kontaktwalze mindestens eine elektrische Elektrode vorgesehen ist,
b) Bereitstellen mindestens einer elektrischen Gegenelektrode zum elektrischen Kontaktieren des zu fördernden Faserhalbzeuges,
c) Anlegen einer Spannung an die mindestens eine Elektrode und/oder Gegenelektrode zum Erzeugen eines Stromflusses in einem durch die Kontaktierung der mindestens einen Elektrode und der mindestens einen Gegenelektrode definierten Abschnitt des zu fördernden Faserhalbzeuges, wenn das Faserhalbzeug gefördert wird.

14. Verfahren nach Anspruch 13, **dadurch gekennzeichnet, dass** eine definierte Anpresskraft durch die mindestens eine FaserhalbzeugKontaktwalze in Richtung des zu fördernden Faserhalbzeuges zur Kompaktierung der Fasern des Faserhalbzeuges aufgebracht wird.

15. Verfahren nach Anspruch 13 oder 14, **dadurch gekennzeichnet, dass** mittels einer Leistungsregeleinheit die elektrische Leistung des in dem Faserhalbzeug bewirkten Stromflusses in Abhängigkeit von einer Fördergeschwindigkeit geregelt wird.

16. Verfahren nach einem der Ansprüche 13 bis 15, **dadurch gekennzeichnet, dass** bei einer Mehrzahl von elektrischen Elektroden und/oder Gegenelektroden an einer oder mehreren Kontaktwalzen mittels einer Elektrodensteuereinheit nacheinander jeweils an mindestens einer der Elektroden (6) eine elektrische Spannung angelegt und die übrigen Elektroden und/oder Gegenelektroden derart geschaltet werden, dass ein Stromfluss zwischen der jeweiligen Elektrode und einer vorgegebenen Gegenelektrode bewirkt wird.
